# EUROPEAN PATENT APPLICATION

(11) **EP 3 780 316 A1**
(43) Date of publication of application: **17.02.2021**
(21) Application number: 18911972.0
(22) Date of filing: 27.04.2018
(51) Int. Cl.: H02J 7/00

(54) **BATTERY TEMPERATURE CONTROL DEVICE FOR BATTERY CHARGING AND SWAPPING STATION AND ELECTRIC-VEHICLE BATTERY CHARGING AND SWAPPING STATION**

(30) Priority: 26.03.2018 CN 201810254287
(71) Applicant: NIO (ANHUI) HOLDING CO., LTD, Economic and Technological Development Zone Hefei Anhui 230601 (CN)
(72) Inventor: WU, Mingyan, Shanghai 201804 (CN); QI, Wengang, Shanghai 201804 (CN); ZHAO, Zhiling, Shanghai 201804 (CN)
(74) Representative: Ungria López, Javier
(86) International application number: PCT/CN2018/084883
(87) International publication number: WO 2019/184046

(57) **Abstract**

Provided are a battery temperature control device for a battery charging and swapping station, and a battery charging and swapping station for an electric vehicle. The battery temperature control device (100) comprises: a pipeline portion (1), a liquid cooling unit (2) and a control portion (3), wherein the pipeline portion is connected to one or more batteries of the battery charging and swapping station and configured to supply a refrigerant to the batteries so as to heat or cool the batteries; the liquid cooling unit is connected to the pipeline portion and configured to cool or heat the refrigerant supplied to the pipeline portion; and the control portion is connected to the liquid cooling unit and configured to control the liquid cooling unit and the pipeline portion. The battery charging and swapping station comprises one or more battery temperature control devices that are provided in a battery compartment (101) inside the battery charging and swapping station for an electric vehicle. The pipeline portion, the liquid cooling unit and the control portion are all of a split design. It is possible to adjust the length of a cable or a hose and set the installation positions of the pipeline portion, the liquid cooling unit and the control portion according to specific spatial layout requirements, thereby meeting requirements for the diversity of the internal design and layout of the battery charging and swapping station.

## Description

### Technical Field

The invention relates to the technical field of new energy vehicles, and in particular, to a battery temperature control device for a battery charging and swapping station, and a battery charging and swapping station for an electric vehicle.

### Background Art

With the rapid development of electric vehicles, how to quickly implement the energy supply of electric vehicles and make the electric vehicles as convenient as conventional fuel vehicles is one of the important problems faced by the electric vehicle industry. This problem has been successfully solved with battery charging and swapping stations. At a battery charging and swap station, a battery in a vehicle that needs energy replenishment is swapped out for a fully charged battery from a battery compartment, and the swapped-out battery is conveyed into the battery compartment for charging. A lithium-ion battery is a core component of an electric vehicle. As the user's requirements for electric vehicles increase, the requirements for the power performance and fast charging performance of a battery system are getting higher and higher, which is followed by an increase in the design requirements for a battery cooling system. It is best to keep the temperature of the lithium-ion battery in the range of 20-35°C during charging. When the temperature of the lithium-ion battery is lower than this temperature range, it is likely to cause a phenomenon of lithium plating during charging or power reduction during charging and discharging. When the temperature of the lithium-ion battery exceeds this range, the cycle life of the lithium-ion battery will decrease sharply, and thermal safety problems may also occur.

Conventional natural cooling and forced air cooling cannot meet the heat dissipation requirements under the conditions of large-rate charge and discharge, so a liquid cooling way with higher heat dissipation efficiency has increasingly become the mainstream heat dissipation way for lithium batteries. At present, a water cooling system of the battery charging and swapping station has at least the following shortcomings.
(1) A display screen of the existing water cooling system is placed on a unit of the water cooling system, and no apparatus blocking the display screen can be placed in front of a control panel, which limits the flexibility of the design and layout of the whole battery charging and swapping station.
(2) A circuit breaker, a relay and other components are usually installed inside a water cooling unit. When the water cooling unit breaks down and needs to be powered off in a timely manner or manually restored, the normal operation of other apparatuses of the battery charging and swapping station would be affected.
(3) The existing water cooling system usually gives a low-liquid-level alarm when the liquid cannot completely immerse an electric heater in a water tank of the water cooling system. The water cooling system stops operating, and the liquid is then filled through a liquid injection port installed on the liquid cooling unit. The liquid level to which a coolant is filled is observed in real time, and the water cooling system needs to be manually restored to normal operation. However, there are at least the following problems.
   A: The liquid injection port and a liquid level meter are placed on the liquid cooling unit, in order to facilitate workers' operations and observe the liquid level in real time. This limits the layout and structural design of the battery charging and swapping station.
   B: After the water cooling system is filled to a certain liquid level, the operation of the water cooling system is manually restored. This increases the operation burden, so that the water cooling system cannot be restored timely.

In summary, some components on a control portion and a pipeline portion of the water cooling system of the existing battery charging and swapping station are placed in or near the water cooling unit, and the positions of the components cannot be adjusted according to specific layout requirements, so that the layout of the battery charging and swapping is limited. Therefore, in order to implement the popularization of battery charging and swapping stations and promote the development of new energy vehicles, how to design and manufacture a water cooling system for battery charging and swapping stations that meets the diversity of the internal design and layout of the battery charging and swapping stations has become an urgent technical problem to be solved.

### Summary of the Invention

The technical problem to be solved by the invention is to provide a battery temperature control device for a battery charging and swapping station, and a battery charging and swapping station for an electric vehicle, which meet the requirements for diversity of the internal design and layout of the battery charging and swapping station.

In order to solve the foregoing technical problems, the invention provides a battery temperature control device for a battery charging and swapping station, the battery temperature control device comprising: a pipeline portion, a liquid cooling unit and a control portion, wherein
the pipeline portion is connected to one or more batteries of the battery charging and swapping station and configured to supply a refrigerant to the batteries so as to heat or cool the batteries;
the liquid cooling unit is connected to the pipeline portion and configured to cool or heat the refrigerant supplied to the pipeline portion; and
the control portion is connected to the liquid cooling unit and configured to control the liquid cooling unit and the pipeline portion.

Further, a first side of the liquid cooling unit is provided with a first air inlet, and at least one of a second side and a third side which are adjacent to the first side is provided with a first air outlet; and inside the liquid cooling unit, the first air inlet and the first air outlet are connected via an air duct.

Further, a cooling fan is installed at the first air inlet and switched between an induced draft mode and an air blowing mode according to requirements.

Further, the battery charging and swapping station is provided with a second air inlet and a second air outlet, the second air inlet is connected to the first air inlet via an air duct, and the second air outlet is connected to the first air outlet via an air duct.

Further, the pipeline portion comprises water pipelines and a liquid filling pipeline which are respectively connected to the liquid cooling unit;
each of the water pipelines comprises a water supply pipeline and a water return pipeline corresponding to the water supply pipeline, the water supply pipeline is configured to feed water, and the water return pipeline is configured to return water;
the liquid filling pipeline is configured to fill the liquid cooling unit with water,
wherein one or more liquid leakage sensors are installed on each of the water supply pipelines and the water return pipelines, the liquid leakage sensors are installed at leakable positions of the water supply pipelines and the water return pipelines, and the leakable positions include pipeline joints.

Further, the pipeline portion further comprises a protection pipeline which is connected to the water pipeline and configured to unblock the water pipeline when the water pipeline is blocked.

Further, the protection pipeline comprises an unblocking portion, a first protection pipeline and a second protection pipeline, wherein one end of the first protection pipeline is connected to the unblocking portion, and the other end thereof is connected to the water supply pipeline; and
one end of the second protection pipeline is connected to the unblocking portion, and the other end thereof is connected to the water return pipeline.

Further, a corresponding raising structure is provided below a non-water-resistant component in the liquid cooling unit to raise the non-water-resistant component, the non-water-resistant component includes one or more of an electrical component, a water pump, a compressor and a fan, and the electrical component includes one or more of a wire, a jack, a relay, a micro circuit breaker and a main control board;
the liquid cooling unit is connected to the pipeline portion via a hose; and
the control portion is connected to the liquid cooling unit via a cable.

Further, a water tank is provided in the liquid cooling unit, and a high-liquid-level sensor is provided at a highest liquid level of the water tank and configured to detect the liquid level in the water tank when liquid is filled through the liquid filling pipeline, and give an alarm prompt when the liquid is filled to the highest liquid level.

Further, the control portion comprises a control panel and an electrical control portion provided on the control panel;
the control panel is configured to automatically control the activation and deactivation of the pipeline portion and the liquid cooling unit, set and monitor a water cooling parameter and give an alarm, wherein the water cooling parameter includes one or more of a water supply temperature of the water supply pipeline, a temperature of the water return pipeline and a battery temperature, and the alarm includes one or more of an electric heating apparatus alarm, a pipeline portion alarm, a water pump alarm and a fan alarm.

The electrical control portion comprises a circuit breaker for manually controlling the activation and deactivation of the pipeline portion and the liquid cooling unit.

The invention further provides a battery charging and swapping station for an electric vehicle, the battery charging and swapping station comprising one or more battery temperature control devices that are provided in a battery compartment inside the battery charging and swapping station for an electric vehicle.

The invention has obvious advantages and beneficial effects as compared with the prior art. By means of the foregoing technical solutions, the battery temperature control device for a battery charging and swapping station and the battery charging and swapping station for an electric vehicle according to the invention can achieve considerable technical progress and practicability, have wide industrial utilization value, and have at least the following advantages.
(1) A way of raising non-water-resistant components and structures is used, so that the space of the battery charging and swapping station is reduced, and the manufacturing cost thereof is reduced.
(2) A control panel and a liquid cooling unit are of a split design and connected via cables, so that the control panel may be placed at a position where the internal structure design and layout of the battery charging and swapping station are not affected and it is convenient for workers to operate and monitor.
(3) An air inlet and an air outlet of the liquid cooling unit are provided on the battery charging and swapping station and connected to the liquid cooling unit via air ducts. This meets the heat dissipation requirements of the liquid cooling unit and the sealing performance of the battery charging and swapping station, and can discharge hot air to the outside of the battery charging and swapping station to avoid affecting the flow field and temperature field inside the battery charging and swapping station.
(4) A relevant electrical control portion of the water cooling system is integrated with the control panel, and is split from the liquid cooling unit. The relevant electrical control portion is placed at a position where the overall design of the battery charging and swapping station is not affected and relevant components can be easily cut off in a timely manner for power-off operations.
(5) Liquid leakage sensors are installed. When liquid leakage occurs, all the operations are cut off and a liquid leakage alarm is given, so that liquid leakage faults can be found in a timely manner to avoid major faults and impacts caused by liquid leakage.
(6) A liquid filling port and the liquid cooling unit are of a split design, and the liquid filling port may be placed at a position where the structure design and layout of the battery charging and swapping station are not affected and it is convenient to operate.
(7) In addition to the design of a liquid level meter on the liquid cooling unit, a liquid level sensor is installed at the highest liquid level. When the liquid is filled to the high liquid level meeting the requirements, the liquid level sensor gives an alarm indicating the completion of liquid filling, and transmits the signal to a water cooling control system to restore the normal operation of the water cooling system.
(8) The liquid cooling unit is connected to the pipeline portion via a hose, and air inlet and outlet surfaces of the liquid cooling unit are of an interchangeable design, thereby meeting the requirements for the diversity of the internal structure design and layout of the battery charging and swapping station.

The description above is only summary of the technical solutions of the invention. In order to understand the technical means of the invention more clearly for implementation according to the contents of the specification, and in order to make the above and other objectives, features and advantages of the invention more apparent and easy to be understood, preferred embodiments are especially taken as examples in conjunction with the accompanying drawings, and the detailed description is as follows.

### Brief Description of the Drawings

Fig. 1 is a schematic diagram of a battery temperature control device for a battery charging and swapping station provided according to an embodiment of the invention;
Fig. 2 is a schematic diagram of an electrical portion raised inside a liquid cooling unit provided according to an embodiment of the invention;
Fig. 3 is a schematic diagram of non-water-resistant components raised inside a liquid cooling unit provided according to an embodiment of the invention;
Fig. 4 is a schematic diagram of an air inlet and an air outlet of a liquid cooling unit provided according to an embodiment of the invention;
Fig. 5 is a schematic diagram of an air blowing mode of a liquid cooling unit provided according to an embodiment of the invention;
Fig. 6 is a schematic diagram of an induced draft mode of a liquid cooling unit provided according to an embodiment of the invention;
Fig. 7 is a schematic diagram of a water tank in a liquid cooling unit provided according to an embodiment of the invention; and
Fig. 8 is a schematic structural diagram of a battery compartment in a battery charging and swapping station and a battery temperature control device provided according to an embodiment of the invention.

**[Description of Symbols]**

| | |
|---|---|
| 1: pipeline portion | 2: liquid cooling unit |
| 3: control portion | 11: water pipeline |
| 12: liquid filling pipeline | 111: water supply pipeline |
| 112: water return pipeline | 113: liquid leakage sensor |
| 13: protection pipeline | 131: unblocking portion |
| 132: first protection pipeline | 133: second protection pipeline |
| 21: raising structure | 22: first air inlet |
| 23: first air outlet | 24: cooling fan |
| 25: high-liquid-level sensor | 26: low-liquid-level sensor |
| 27: electric heating structure | 100: battery temperature control device |
| 101: battery compartment | |

### Detailed Description of Embodiments

In order to further illustrate the technical means used to achieve the intended purpose of the invention and the technical effects of the invention, the specific implementation of a battery temperature control device for a battery charging and swapping station and a battery charging and swapping station for an electric vehicle proposed in the invention and the effects thereof are described in detail hereinafter in conjunction with the accompanying drawings and the preferred embodiments.

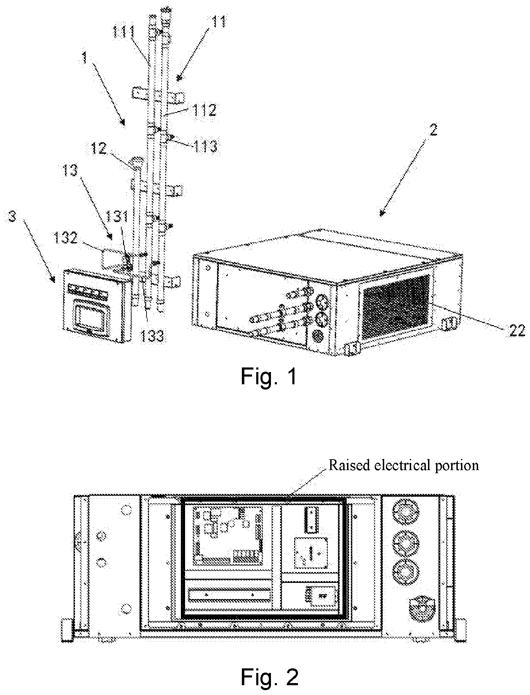

As shown in Fig. 1, an embodiment of the invention provides a battery temperature control device for a battery charging and swapping station. The battery temperature control device comprises: a pipeline portion 1, a liquid cooling unit 2 and a control portion 3, wherein the pipeline portion 1 is connected to one or more batteries of the battery charging and swapping station and configured to supply a refrigerant to the batteries so as to heat or cool the batteries. The liquid cooling unit 2 is connected to the pipeline portion 1. As an example, the liquid cooling unit 2 may be connected to the pipeline portion 1 via a hose and is configured to cool or heat the refrigerant in the pipeline portion 1. The refrigerant may be water. This can reduce the cost of the temperature control device and improve the cooling and heating efficiency. Correspondingly, the liquid cooling unit 2 is a water cooling unit. The control portion 3 is connected to the liquid cooling unit 2. As an example, the control portion 3 may be connected to the liquid cooling unit 2 via a cable and is configured to control the pipeline portion 1 and the liquid cooling unit 2. The control portion 3 and the liquid cooling unit 2 are of a split design and connected via a cable; and the pipeline portion 2 and the liquid cooling unit 2 are of a split design and connected via a hose, so that the control portion 3 and the pipeline portion 2 may be placed at positions where the internal structure design and layout of the battery charging and swapping station are not effected and it is convenient for workers to operate and monitor. This can meet the requirements for the diversity of the internal structure design and layout of the battery charging and swapping station.

It should be noted that the battery charging and swapping station according to the invention is a battery charging and swapping station for an electric vehicle. The electric vehicle is not limited to a battery electric vehicle, and further includes a hybrid electric vehicle with a battery that can be charged or swapped by the battery charging and swapping station.

As an example, the pipeline portion 1 comprises water pipelines 11 and a liquid filling pipeline 12. The water pipelines 11 and the liquid filling pipeline 12 are respectively connected to the liquid cooling unit 2. Each of the water pipelines 11 comprises a water supply pipeline 111 and a water return pipeline 112 corresponding to the water supply pipeline 111, the water supply pipeline 111 is configured to feed water, and the water return pipeline 112 is configured to return water. The liquid filling pipeline 12 is configured to fill the liquid cooling unit 2 with water. Since the pipeline portion 1 and the liquid cooling unit 2 are of a split design, a liquid filling port of the liquid filling pipeline 12 and the liquid cooling unit 2 are also of a split design. According to specific layout requirements, the liquid filling pipeline 12 may be placed at a position where the structure design and layout of the battery charging and swapping station are not affected and it is convenient to perform a liquid filling operation.

In order to find out liquid leakage faults of the water pipeline 11 in a timely manner and avoid major faults and impacts caused by liquid leakage of the pipeline, one or more liquid leakage sensors 113 may be installed on each of the water supply pipelines 111 and the water return pipelines 112. As an example, the liquid leakage sensors 113 are installed at leakable positions of the water supply pipelines 111 and the water return pipelines 112, and the leakable positions include pipeline joints, etc. The installation design of the liquid leakage sensors 113 in the embodiment of the invention improves the accuracy and reliability of the liquid leakage detection of the temperature control device, thereby improving the safety and reliability of the operation of the battery charging and swapping station, and avoiding safety accidents caused by liquid leakage.

When the battery temperature control device operates normally, water in the water supply pipeline 111 flows across a battery to be cooled or heated, and then flows into the water return pipeline 112. The water supply pipeline 111 is in communication with the water return pipeline 112. However, if the battery temperature control device is switched, during normal operation, to a state where no battery is connected, the water supply pipeline 111 and the water return pipeline 112 cannot be in communication. This results in blockage of the water pipelines 11, which may cause safety accidents. In order to avoid such safety accidents, a protection pipeline 13 may be provided in the pipeline portion 1. The protection pipeline is connected to the water pipeline 11 and configured to unblock the water pipeline 11 when the water pipeline 11 is blocked.

For example, as shown in Fig. 1, the protection pipeline 13 comprises an unblocking portion 131, a first protection pipeline 132 and a second protection pipeline 133, wherein one end of the first protection pipeline 132 is connected to the unblocking portion 131, and the other end thereof is connected to the water supply pipeline 111; and one end of the second protection pipeline 133 is connected to the unblocking portion 131, and the other end thereof is connected to the water return pipeline 112.

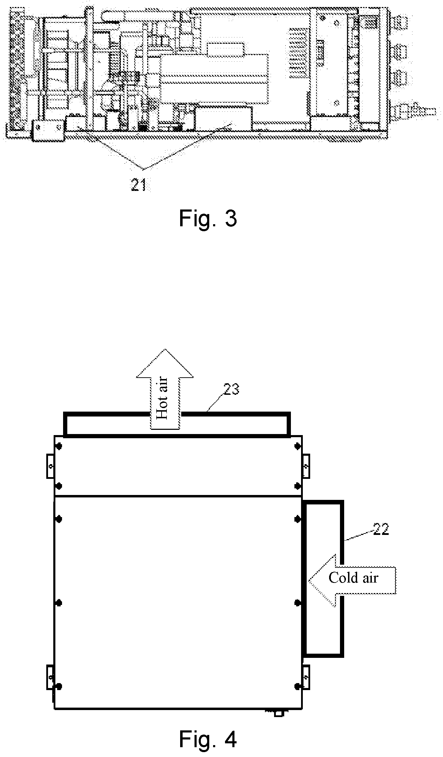

The liquid cooling unit 2 is internally provided with multiple water cooling structures and components, specifically including one or more of a compressor, a water pump, a fan, an electric heater, a water tank, a battery valve, a temperature sensor, an expansion valve, a condenser, an electrical component, etc. When the battery temperature is excessively high, a cooling mode is started, and the battery is cooled by means of the compressor, the water pump, the expansion valve, etc. When the battery temperature is excessively high, a heating mode is started, and the battery is heated by means of the electric heater and the water pump. The temperature of the battery is controlled within a proper range through the two modes: the heating mode and the cooling mode, so as to ensure the charging speed of the battery and the life of the battery. The liquid cooling unit 2 may be composed of any existing water cooling structure. Therefore, the specific composition inside the liquid cooling unit 2 and the connection relationship between various components are not described herein. The embodiment of the invention focuses on the waterproof design of the liquid cooling unit 2. As an example, as shown in Figs. 2 and 3, corresponding raising structures 21 are provided below non-water-resistant components in the liquid cooling unit 2 to appropriately raise the non-water-resistant components. It should be noted that the raised height of one non-water-resistant component may be the same as or different from that of another non-water-resistant component. The specific raised height may be set according to the layout of the battery charging and swapping station, the height of the liquid cooling unit 2, the height of the raised non-water-resistant component and other parameters. The non-water-resistant component includes one or more of an electrical component, a water pump, a compressor and a fan, and the electrical component includes one or more of a wire, a jack, a relay, a micro circuit breaker and a main control board. As an example, the raising structure 21 is a boss connected to the raised component via a bolt. However, it can be understood that the raising structure 21 is not limited to a boss, and may also be other structures, such as a lead screw structure, and the raised height may be adjusted by the lead screw structure.

Further, not all parts of some non-water-resistant components are non-water-resistant. An example is a water pump. A non-water-resistant part of the water pump is mainly an electric motor. Therefore, only a raising structure 21 may be provided at a lower portion of the electric motor in the water pump while not raising other parts of the water pump except the motor. This can reduce the cost of the battery temperature control device, reduce the space thereof and increase the diversity of the layout thereof. The waterproof design of the liquid cooling unit 2 in the embodiment of the invention avoids the waste of space, increases the flexibility of the whole system design and layout of the battery charging and swapping station, reduces the cost of the temperature control device, and increases the selection types of waterproof devices.

In order to prevent the situation that a short distance between the air inlet and the air outlet of the liquid cooling unit causes hot air blown out to be directly introduced into the liquid cooling unit by the fan such that the cold air has an excessively high temperature, the heat exchange cannot be performed, and the water cooling system breaks down, as shown in Fig. 4, a first side of the liquid cooling unit 2 may be provided with a first air inlet 22, and at least one of a second side and a third side which are adjacent to the first side is provided with a first air outlet 23; and inside the liquid cooling unit 2, the first air inlet 22 and the first air outlet 23 are connected via an air duct. For example, the second side and the third side which are adjacent to the first side are each provided with a first air outlet 23, such that when being used in the battery charging and swapping station, one of the first air outlets 23 is selected and the other first air outlet 23 is sealed by a cover plate according to the layout requirements. Such a structure can increase the diversity and flexibility of the layout of the battery control device in the battery charging and swapping station.

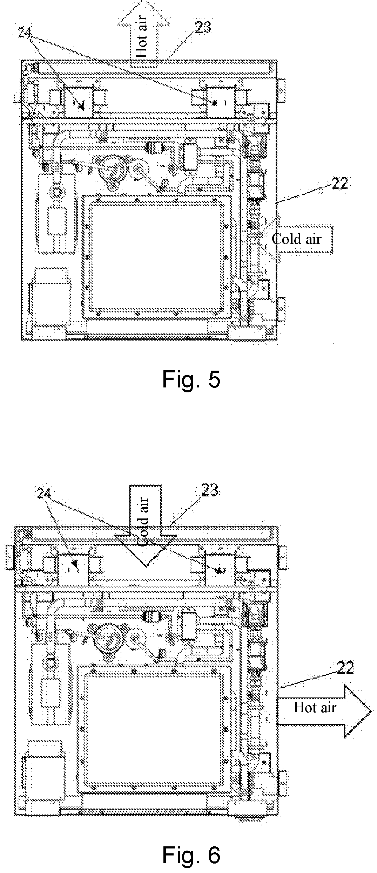

In Figs. 5 and 6, the air inlet and the air outlet are described by tacking one first air outlet 23 as an example. A cooling fan 24 is installed at the first air inlet 22, and the cooling fan 24 is switched between an induced draft mode and an air blowing mode according to requirements. As an example, the cooling fan 24 may operate in the induced draft mode and in the air blowing mode by changing internal wiring of the cooling fan 24, so that air inlet and outlet functions of the first air inlet 22 and the first air outlet 23 can be interchanged. Specifically, as shown in Fig. 5, the cooling fan 24 operates in the air blowing mode. In this case, the first air outlet 23 is used as an air outlet for discharging hot air, and correspondingly, the first air inlet 22 is an air inlet for sucking cold air. The cooling fan 24 operates in the induced draft mode by changing the wiring of the cooling fan 24, as shown in Fig. 6. In this case, the first air outlet 23 is changed into an air inlet for sucking cold air, and correspondingly, the first air inlet 22 is changed into an air outlet for discharging hot air. As a variation of the above example, the first air outlet 23 may be also provided with an induced draft fan and a blowing fan, and the cooling fan 24 is then controlled such that it is connected to the induced draft fan and operates in the induced draft mode, or the cooling fan 24 is controlled such that it is connected to the blowing fan and operates in the air blowing mode.

In order to make cooling air of the liquid cooling unit only flow through the liquid cooling unit 2 and be completely isolated from the battery charging and swapping station, the battery charging and swapping station may be provided with a second air inlet and a second air outlet. The second air inlet is connected to the first air inlet 22 via an air duct, and the second air outlet is connected to the first air outlet 23 via an air duct. In this way, the heat dissipation requirements of the liquid cooling unit 2 and the sealing performance of the battery charging and swapping station can be met, and the hot air will not be discharged into the battery charging and swapping station affecting the flow field and temperature field inside the battery charging and swapping station. It should be noted that air inlet and outlet functions of the second air inlet and the second air outlet are interchanged as the air inlet and outlet functions of the first air inlet 22 and the first air outlet 23 are interchanged, thereby meeting the diversity of the internal structural design and layout of the battery charging and swapping station. Through the design of the air ducts, heat emitted by the battery in the battery charging and swapping station and heat emitted by the temperature control device are directly discharged to the outside of the battery charging and swapping station through the air ducts. This prevents the temperature rise in the battery charging and swapping station caused by the emitted heat, avoids the heat exchange between a refrigerant and cold air that does not meet the temperature requirements in the battery charging and swapping station due to the emitted heat, and prevents a high-pressure alarm of the temperature control device. The existing battery charging and swapping station is not provided with the air duct structure described in the embodiment of the invention to discharge heat from the battery charging and swapping station, so an air conditioner and the like are usually used to keep the temperature in the battery charging and swapping station. The embodiment of the invention directly discharges the heat from the battery charging and swapping station, thereby reducing the cost of the battery charging and swapping station and avoiding energy waste. In addition, the temperature of the hot air discharged from the temperature control device is usually about 15-20°C higher than that of the cold air. If the hot air blows components which cannot operate normally at high temperature in the battery charging and swapping station, the normal use of the components is affected, thereby affecting the operation of the battery charging and swapping station. The air duct structure of the embodiment of the invention also effectively avoids this situation and improves the operation reliability of battery charging and swapping.

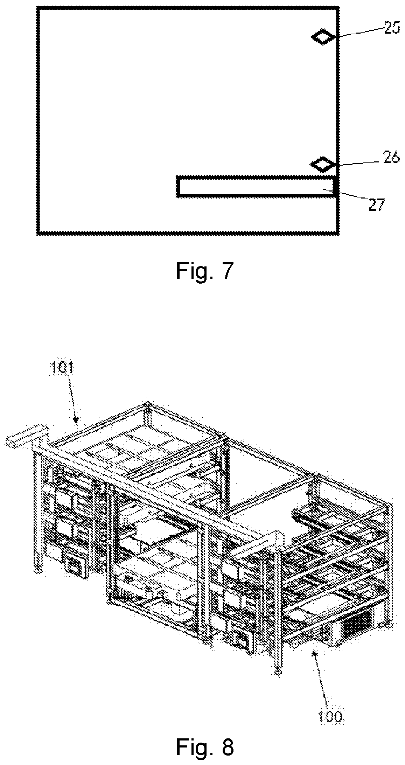

The liquid cooling unit 2 is internally provided with a water tank, and is also generally provided with a corresponding liquid level meter. As an example, as shown in Fig. 7, a high-liquid-level sensor 25 is arranged at the highest liquid level of the water tank, and configured to detect the liquid level in the water tank when liquid is filled through the liquid filling pipeline 12. When the liquid is filled to the highest liquid level, the high-liquid-level sensor 25 is affected by the buoyancy of the coolant, and gives an alarm indicating the completion of liquid filling. The alarm prompt may be set to automatically stop after 1 min, the liquid filling completion signal is transmitted to the control portion 3, and the normal operation of the temperature control device is automatically restored. The water tank is also internally provided with a low-liquid-level sensor 26, an electric heating structure 27, etc. to prevent dry burning.

As an example, the control portion 3 comprises a control panel 31 and an electrical control portion 32 provided on the control panel 31. The control panel 31 is configured to automatically control the activation and deactivation of the pipeline portion 1 and the liquid cooling unit 2, set and monitor a water cooling parameter, and give an alarm. The water cooling parameter includes one or more of a water supply temperature of the water supply pipeline 111, a water return temperature of the water return pipeline 112 and a battery temperature. The alarm includes one or more of an electric heating apparatus alarm, a pipeline portion alarm, a water pump alarm and a fan alarm. After receiving high-level information, the control portion 3 can automatically disconnect the corresponding apparatus and give an alarm prompt, etc. Since the control panel 31 and the liquid cooling unit 2 are of a split design, the control panel 31 may be placed at a position where the overall design of the battery charging and swapping station is not affected and relevant components can be easily cut off by workers in a timely manner for power-off operations. This can facilitate the workers' real-time operation and monitoring. In addition, after the battery charging and swapping station adopts this layout, other apparatuses can be placed near the liquid cooling unit 2. For example, an air compressor is placed at a front end of the liquid cooling unit 2, and operators can also stand at an outer end of a battery rack to operate without going to the bottom of the battery rack for operation.

In addition, an apparatus that gives an alarm or an apparatus that needs to be disconnected under other circumstances can also be manually disconnected. The manual operation can be implemented by means of the electrical control portion 32. The electrical control portion 32 comprises a circuit breaker for manually controlling the activation and deactivation of the pipeline portion 1 and the liquid cooling unit 2.

An embodiment of the invention further provides a battery charging and swapping station for an electric vehicle. The battery charging and swapping station for an electric vehicle comprises one or more battery temperature control devices 100. The battery temperature control devices 100 are provided in a battery compartment 101 of the battery charging and swapping station for an electric vehicle. The battery compartment 101 is configured to store a battery, charge a used battery and provide a fully charged battery for a battery swap trolley of the battery charging and swapping station. It can be understood that the structure of the battery compartment is not limited, and may be a frame structure, etc. As an example shown in Fig. 8, the liquid cooling unit 2 may be provided at the bottom of the battery compartment 101 and is connected to a battery in the battery compartment 101 via the pipeline portion 1, and the control portion 3 may be provided outside the battery compartment 101 to facilitate the detection and operation of the battery temperature control device 100.

In summary, in the battery temperature control device for a battery charging and swapping station and the battery charging and swapping station for an electric vehicle according to the embodiments of the invention, a way of raising non-water-resistant components and structures is used, so that the space of the battery charging and swapping station is reduced, and the manufacturing cost thereof is reduced. The control panel 31 and the liquid cooling unit 2 are of a split design and connected via cables, so that the control panel 31 may be placed at a position where the internal structure design and layout of the battery charging and swapping station are not affected and it is convenient for workers to operate and monitor. The air inlet and the air outlet of the liquid cooling unit 2 are provided on the battery charging and swapping station and connected to the liquid cooling unit 2 via air ducts. This meets the heat dissipation requirements of the liquid cooling unit 2 and the sealing performance of the battery charging and swapping station, and can discharge hot air to the outside of the battery charging and swapping station to avoid affecting the flow field and temperature field inside the battery charging and swapping station. A relevant electrical control portion 32 of the water cooling system is integrated with the control panel 31, and is split from the liquid cooling unit 2. The relevant electrical control portion may be placed at a position where the overall design of the battery charging and swapping station is not affected and relevant components can be easily cut off in a timely manner for power-off operations. With the installation of liquid leakage sensors 113, when liquid leakage occurs, all the operations are cut off and a liquid leakage alarm is given, so that liquid leakage faults can be found in a timely manner to avoid major faults and impacts caused by liquid leakage. A liquid filling port and the liquid cooling unit 2 are of a split design, and the liquid filling port may be placed at a position where the structure design and layout of the battery charging and swapping station are not affected and it is convenient to operate. In addition, a liquid level sensor is installed at the highest liquid level in the invention. When the liquid is filled to the high liquid level meeting the requirements, the liquid level sensor gives an alarm indicating the completion of liquid filling, and transmits the signal to the water cooling control portion 3 to restore the normal operation of the device. The liquid cooling unit 2 is connected to the pipeline portion 1 via a hose, and air inlet and outlet surfaces of the liquid cooling unit 2 are of an interchangeable design, etc, thereby meeting the requirements for the diversity of the internal structure design and layout of the battery charging and swapping station.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A battery temperature control device for a battery charging and swapping station, **characterized in that** the device comprises a pipeline portion, a liquid cooling unit and a control portion, wherein
the pipeline portion is connected to one or more batteries of the battery charging and swapping station and configured to supply a refrigerant to the batteries so as to heat or cool the batteries;
the liquid cooling unit is connected to the pipeline portion and configured to cool or heat the refrigerant supplied to the pipeline portion; and
the control portion is connected to the liquid cooling unit and configured to control the liquid cooling unit and the pipeline portion.

2. The battery temperature control device for a battery charging and swapping station according to claim 1, **characterized in that**
a first side of the liquid cooling unit is provided with a first air inlet, and at least one of a second side and a third side which are adjacent to the first side is provided with a first air outlet; and
inside the liquid cooling unit, the first air inlet and the first air outlet are connected via an air duct.

3. The battery temperature control device for a battery charging and swapping station according to claim 2, **characterized in that**
a cooling fan is installed at the first air inlet and switched between an induced draft mode and an air blowing mode according to requirements.

4. The battery temperature control device for a battery charging and swapping station according to claim 2, **characterized in that**
the battery charging and swapping station is provided with a second air inlet and a second air outlet, the second air inlet is connected to the first air inlet via an air duct, and the second air outlet is connected to the first air outlet via an air duct.

5. The battery temperature control device for a battery charging and swapping station according to claim 1, **characterized in that**
the pipeline portion comprises water pipelines and a liquid filling pipeline which are respectively connected to the liquid cooling unit;
each of the water pipelines comprises a water supply pipeline and a water return pipeline corresponding to the water supply pipeline, the water supply pipeline is configured to feed water, and the water return pipeline is configured to return water;
the liquid filling pipeline is configured to fill the liquid cooling unit with water;
wherein one or more liquid leakage sensors are installed on each of the water supply pipelines and the water return pipelines, the liquid leakage sensors are installed at leakable positions of the water supply pipelines and the water return pipelines, and the leakable positions include pipeline joints.

6. The battery temperature control device for a battery charging and swapping station according to claim 5, **characterized in that**
the pipeline portion further comprises a protection pipeline which is connected to the water pipeline and configured to unblock the water pipeline when the water pipeline is blocked.

7. The battery temperature control device for a battery charging and swapping station according to claim 6, **characterized in that**
the protection pipeline comprises an unblocking portion, a first protection pipeline and a second protection pipeline, wherein one end of the first protection pipeline is connected to the unblocking portion, and the other end thereof is connected to the water supply pipeline; and
one end of the second protection pipeline is connected to the unblocking portion, and the other end thereof is connected to the water return pipeline.

8. The battery temperature control device for a battery charging and swapping station according to claim 1, **characterized in that**
a corresponding raising structure is provided below a non-water-resistant component in the liquid cooling unit to raise the non-water-resistant component, the non-water-resistant component includes one or more of an electrical component, a water pump, a compressor and a fan, and the electrical component includes one or more of a wire, a jack, a relay, a micro circuit breaker and a main control board;
the liquid cooling unit is connected to the pipeline portion via a hose; and
the control portion is connected to the liquid cooling unit via a cable.

9. The battery temperature control device for a battery charging and swapping station according to claim 1, **characterized in that**
a water tank is provided in the liquid cooling unit, and a high-liquid-level sensor is provided at a highest liquid level of the water tank and configured to detect the liquid level in the water tank when liquid is filled through the liquid filling pipeline, and give an alarm prompt when the liquid is filled to the highest liquid level.

10. The battery temperature control device for a battery charging and swapping station according to claim 5, **characterized in that**
the control portion comprises a control panel and an electrical control portion provided on the control panel;
the control panel is configured to automatically control the activation and deactivation of the pipeline portion and the liquid cooling unit, set and monitor a water cooling parameter and give an alarm, wherein the water cooling parameter includes one or more of a water supply temperature of the water supply pipeline, a temperature of the water return pipeline and a battery temperature, and the alarm includes one or more of an electric heating apparatus alarm, a pipeline portion alarm, a water pump alarm and a fan alarm; and
the electrical control portion comprises a circuit breaker for manually controlling the activation and deactivation of the pipeline portion and the liquid cooling unit.

11. A battery charging and swapping station for an electric vehicle, **characterized by** comprising a battery temperature control device according to any one of claims 1 to 10, wherein the battery temperature control device is provided in a battery compartment inside the battery charging and swapping station for an electric vehicle.
